# EUROPÄISCHE PATENTSCHRIFT

(11) **EP 2 523 734 B1**
(45) Veröffentlichungstag und Bekanntmachung des Hinweises auf die Patenterteilung: **02.04.2014**
(21) Anmeldenummer: 11700888.8
(22) Anmeldetag: 10.01.2011
(51) Int. Cl.: A63B 5/11

(54) **Trampolin**
Trampoline
Trampoline

(30) Priorität: 11.01.2010 DE 102010004277
(43) Veröffentlichungstag der Anmeldung: 21.11.2012
(73) Patentinhaber: Bellicon AG, 5454 Bellikon (CH)
(72) Erfinder: MEHR, Christian, CH-5036 Oberentfelden (CH); CREMA, Rolf, 35630 Ehringshausen (DE)
(74) Vertreter: Rätsch, Caroline
(86) Internationale Anmeldenummer: PCT/EP2011/000055
(87) Internationale Veröffentlichungsnummer: WO 2011/083093

(56) Entgegenhaltungen:
- DE-U1- 20 013 711
- US-A- 4 630 816
- US-B1- 7 018 322

## Beschreibung

Die Erfindung betrifft ein Trampolin mit abnehmbaren Beinen, wobei die Beine ein Verbindungsstück und einen langgestreckten Beinabschnitt (15) aufweisen, der schwenkbar mit dem Verbindungsstück gekoppelt ist.

Die Erfindung geht aus von so genannten Mini-Trampolinen, wie sie beispielsweise aus 10 2006 028 363 B3 bekannt sind. Derartige Trampoline weisen einen Rahmen auf, an dem das Sprungtuch über einzelne gummielastische Seilabschnitte aufgehängt ist. Die elastischen Seilabschnitte gestatten dem Benutzer ein besonders "weiches" Schwingen. Alternativ können Federn, insbesondere Spiralfedern zum Einsatz kommen.

An dem Rahmen sind vertikale Beine angebracht, die den Rahmen mit dem Sprungtuch im Abstand zum Untergrund halten. Das Trampolin hat sich im Freizeitbereich wie auch im physiotherapeutischen Bereich und in der präventiven Gesundheitsförderung bestens bewährt.

Grundsätzlich ist es erstrebenswert, beispielsweise aus lager- oder transporttechnischen Gründen Trampoline möglichst platzsparend zu konstruieren. Aus der DE 299 04 939 U1 ist ein Trampolin bekannt, dessen Beine an den Rahmen ansteckbar sind. Hierbei werden die Beine in eine am Rahmen angeordnete Aufnahme eingeclipst. Untersuchungen haben ergeben, dass die ansteckbaren Beine den Anforderungen im Betrieb nicht gerecht werden. Insbesondere besteht die Gefahr, dass sich die Beine mit der Zeit lockern. Dies führt zum einen zu unerwünschten Geräuschen, die den Benutzer irritieren. Zum anderen kann sich durch lockere Beine das Schwingungsverhalten des Trampolins ändern. Nicht zuletzt besteht die Gefahr eines Lösens oder Abbrechens der Beine mit fatalen Folgen für den Benutzer.

Aus der US 2005/0137061 A1 ist ein Trampolin bekannt, dessen Beine an dem Rahmen anschraubbar sind. Derartige Beine bieten zwar eine bessere Sicherheit als gesteckte Beine, ihre Befestigung an dem Rahmen ist jedoch umständlich. Jedes Bein erfordert mehrere Umdrehungen bis zum Anschlag.

Aus der US 6,648,799 B2 ist ein Trampolin mit abklappbaren Beinen bekannt. Die Beine sind auf einen zylindrischen Ansatz am Rahmen gestülpt und können gegen die Zugkraft einer Feder abgezogen und umgelegt werden. Die Beine sind durch die Feder an dem Rahmen gehalten. Im abgeklappten Zustand ist die Stellung der Beine undefiniert.

Aus der DE 200 13 711 U1 ist ebenfalls ein Trampolin mit abklappbaren Beinen bekannt, deren langgestreckter Beinabschnitt schwenkbar mit einem an dem Trampolinrahmen festgelegten Verbindungsstück gekoppelt ist.

Ausgehend von dem bekannten Stand der Technik liegt der Erfindung die **Aufgabe** zugrunde, ein Trampolin mit abklappbaren Beinen auszustatten, die abnehmbar sind und deren abgeklappte Endstellung definiert ist.

Die Aufgabe wird gelöst durch ein Trampolin mit den Merkmalen des Patentanspruchs 1.

Durch die Erfindung ist es erstmals möglich, ein Trampolin mit abklappbaren Beinen auszustatten, die abnehmbar sind und deren abgeklappte Endstellung definiert ist. Dies wird ermöglicht durch das Verbindungsstück, das gelenkig mit dem Beinabschnitt verbunden ist.

Die Erfindung bietet wesentliche Vorteile. Ein Vorteil besteht darin, dass durch das Verbindungsstück die Möglichkeit gegeben ist, eine sichere und stabile Anbindung an den Trampolinrahmen und gleichzeitig eine stabile Anlenkung für den langgestreckten Beinabschnitt zu schaffen. Dies wird insbesondere durch ein Verbindungsstück ermöglicht, das auf der einen Seite schwenkbar mit dem Beinabschnitt verbunden ist und auf seiner anderen Seite eine Einrichtung zum Verbinden mit dem Trampolin, insbesondere mit dessen Rahmen, aufweist. Vorzugsweise weist das Verbindungsstück einen rückwärtigen Ansatz auf, durch den hindurch die Schwenkachse geht.

Ein weiterer Vorteil besteht in reduzierten Transportkosten. Durch das Abnehmen der Klappbeine kann das Transportvolumen deutlich reduziert werden. Schließlich wird durch das Verbindungsstück besonders vorteilhaft ermöglicht, dass die an dem Rahmen angeordneten Ansätze zur Anbindung der Trampolinbeine auch so beschaffen sein können, dass sowohl die erfindungsgemäßen Klappbeine als auch starre (nicht klappbare) Beine festgelegt werden könne. Bei herkömmlichen Trampolinen war entweder die Befestigung von Klappbeinen oder die Befestigung von starren Beinen möglich. Bei dem Verbindungsstück hingegen ist es möglich, dessen Ende zur Anbindung an den Trampolinrahmen auszubilden wie ein starres Bein, zum Beispiel mit einem Gewinde, das in einen am Rahmen angeordneten Gewindeansatz schraubbar ist. Je nach Kundenwunsch kann also eine einzige Grundform eines Trampolinrahmens alternativ mit einem Klappbein oder einem starren Bein ausgestattet werden.

Vorzugsweise weist das Verbindungsstück einen rückwärtigen Ansatz auf, durch den hindurch die Schwenkachse geht. Das Verbindungsstück und der Beinabschnitt sind über die Schwenkachse gelenkig miteinander gekoppelt. Der Begriff der "Kopplung" umfasst die direkte und die indirekte Anbindung des Beinabschnitts an dem Verbindungsstück. Die indirekte Anbindung erfolgt beispielsweise über ein Adapterstück oder eine Stange, wie es im folgenden noch näher ausgeführt wird. Im vorderen Abschnitt des Verbindungsstücks ist vorteilhafterweise die Einrichtung zur Befestigung des Beins an dem Rahmen angeordnet.

Bei Klappbeinen ist es von wesentlicher Bedeutung, dass die Beine im zusammengeklappten Zustand einheitlich in die Mitte des Trampolins zeigen. In diesem Zusammenhang wird vorgeschlagen, dass der Beinabschnitt derart mit dem Verbindungsstück gekoppelt ist, dass er im wesentlichen nur in einer Ebene schwenkbar ist. Die kann ermöglicht werden durch die Schwenkachse.

Alternativ oder zusätzlich weist das Verbindungsstück zweckmäßig mindestens eine Führung auf, die die Schwenkbewegung des Beinabschnitts seitlich begrenzt. In diesem Zusammenhang hat es sich bewährt, dass die eigentliche Schwenkbewegung durch die Schwenkachse definiert wird. Je nach Ausgestaltung der Schwenkachse können Toleranzen zwischen der Achse und dem Beinabschnitt zu einem Spiel führen, die ein geringfügiges Verlassen der Schwenkebene ermöglichen (dies wird vorstehend durch die Formulierung "im wesentlichen in einer Ebene" berücksichtigt). Vorzugsweise kann das Verbindungsstück mindestens eine Führung aufweisen, die die Richtung der Schwenkbewegung des Beinabschnitts definiert. Durch die Führung werden auch seitliche Abweichungen der Schwenkbewegung des Beinabschnitts begrenzt. Vorzugsweise wird die Führung gebildet durch den rückwärtigen Ansatz des Verbindungsstücks, insbesondere durch in dem Ansatz ausgebildete Führungsflächen.

Die Festlegung des Beinabschnitts in der ausgeklappten Endstellung ist abhängig von der konkreten Beinkonstruktion. Eine vorteilhafte Ausführungsform der Erfindung ist dadurch gekennzeichnet, dass der Beinabschnitt auf das Verbindungsstück aufsteckbar ist. Der langgestreckte Beinabschnitt ist zweckmäßig als zylindrisches Rohr ausgebildet, das auf den rückwärtigen Ansatz steckbar ist. Insbesondere kann vorgesehen sein, dass der Beinabschnitt unter Vorspannung mit dem Verbindungsstück verbunden ist. Für die Rohrkonstruktion bedeutet dies, dass der Beinabschnitt gegen die Kraft (insbesondere gegen die Zugkraft) einer Feder von dem Verbindungsstück abgehoben und anschließend abgeklappt werden kann.

In wesentlicher Weiterbildung des erfindungsgemäßen Trampolins wird vorgeschlagen, dass das Bein eine in dem Beinabschnitt angeordnete Stange aufweist, die an ihrem einen Ende an dem Verbindungsstück angelenkt und an ihrem anderen Ende federbeaufschlagt ist. Die Stange (und damit der Beinabschnitt) ist schwenkbar. Der Beinabschnitt ist gegen die Federkraft von dem Verbindungsstück abhebbar, so dass ein Stellungswechsel des Beinabschnitts von der ausgeklappten in die eingeklappte Stellung und umgekehrt vorgenommen werden kann.

Vorzugsweise ist die Stange in dem Beinabschnitt geführt. Hierzu weist das Bein mindestens eine Führung auf, die sich vorteilhafterweise an der Beinabschnitt-Innenwand abstützt.

Alternativ zu der Stangenkonstruktion kommt vorteilhaft ein Adapterstück zum Einsatz, das auf der einen Seite mit dem Beinabschnitt verbunden ist und das auf der anderen Seite an dem Verbindungsstück angelenkt ist. Vorzugsweise umgreift das Adapterstück die Seitenflächen des rückwärtigen Ansatzes des Verbindungsstücks. Die Beine werden bei einer derartigen Konstruktion in der Ebene der Seitenflächen geschwenkt. Hier wirken die Seitenflächen als Führung.

Neben der Abklappbarkeit der Beine ist es von zentraler Bedeutung, dass die Beine nach dem Ausklappen einen stabilen Stand des Trampolins gewährleisten. Dies wird vorteilhaft dadurch ermöglicht, dass der Beinabschnitt sowohl in der ausgeklappten Stellung als auch in der eingeklappten Stellung arretierbar ist. Eine besonders vorteilhafte Ausführungsform ist dadurch gekennzeichnet, dass das Verbindungsstück zwei Bohrungen aufweist, in die ein Arretierbolzen zur wahlweisen Festlegung des Beins in der ausgeklappten oder der eingeklappten Stellung in Eingriff bringbar ist. Die Bohrungen erstrecken sich zweckmäßig in die jeweilige Richtung der Stellung des Beinabschnitts.

In wesentlicher Weiterbildung der Erfindung wird vorgeschlagen, dass das Verbindungsstück mindestens einen vorzugsweise unterbrochenen Außengewindeabschnitt aufweist. Die erfindungsgemäße Weiterbildung ermöglicht eine einfache Befestigung der Beine an dem Trampolin bzw. dessen Rahmen. Gleichzeitig wird durch den erfindungsgemäßen Gewindeeingriff eine stabile (und lösbare) Verbindung geschaffen, wie es nachstehend noch näher ausgeführt wird. Insbesondere kann das Verbindungsstück zwei gegenüberliegende Außengewindeabschnitte und/oder eine Schulter aufweisen, die als Anschlag dient.

Der stabilen Befestigung der Beine an dem Trampolinrahmen kommt grundsätzlich eine besondere Bedeutung zu. Der Rahmen weist über seinen Umfang verteilte Ansätze auf, über die die Beine an dem Rahmen festgelegt werden. Im Zusammenhang mit dem Stand der Technik ist die Möglichkeit der Einclipsbarkeit von Beinen angesprochen worden. Eine derartige Konstruktion ist wenig vorteilhaft in Bezug auf ihre Haltbarkeit. Eine besonders vorteilhafte Ausführungsform ist dadurch gekennzeichnet, dass der Rahmen des Trampolins mindestens einen Ansatz mit einem Innengewinde aufweist, das in mindestens einem Teilabschnitt eine Ausnehmung aufweist, und dass das Verbindungsstück mindestens einen Außengewindeabschnitt aufweist, mit dem es in die Ausnehmung des Ansatzes steckbar und durch Relativdrehung in Gewindeeingriff mit dem Ansatz bringbar ist.

Die erfindungsgemäße Gewindekonstruktion vereint eine Reihe von Vorteilen, die sie gegenüber bekannten Lösungen weit überlegen macht. Vor allem wird erfindungsgemäß eine Verbindung geschaffen, die einerseits eine schnelle und einfache Montage des Trampolins gestattet und die andererseits höchsten Ansprüchen an eine stabile und haltbare Konstruktion gerecht wird. Zweckmäßig handelt es sich bei dem Innengewinde um ein eingängiges Gewinde.

Zur Verbindung der Beine mit dem Rahmen wird das Verbindungsstück in einem ersten Schritt in den Ansatz eingesteckt. Vorzugsweise begrenzt ein Anschlag oder eine andere Einrichtung die Einstecktiefe. In einem zweiten Schritt wird das Bein gedreht. Hierbei gelangen die beiden Gewindeabschnitte in Eingriff miteinander und schaffen damit eine formschlüssige Verbindung. Vorzugsweise kommen bei dem Eingriff mehrere Gewindeflanken zum Eingriff.

Der schnelle und einfache Zusammenbau des Trampolins wird ermöglicht durch die Ausnehmung, die vorteilhaft den Gewindegang des Innengewindes unterbricht. In diese Ausnehmung kann der Teilgewindeabschnitt des Außengewindes des Verbindungsstücks eingesteckt und beide Verbindungspartner anschließend miteinander verbunden werden. Vorzugsweise erstreckt sich hierbei die Ausnehmung in Einsteckrichtung. Insbesondere wird es als vorteilhaft angesehen, wenn sich die Ausnehmung in Axialrichtung der Verbindungspartner erstreckt.

Die Teilgewindeabschnitte der beiden Verbindungspartner gelangen wie zuvor geschildert bei einer Relativdrehung in Eingriff miteinander. Grundsätzlich ist es möglich, eine einzige Ausnehmung vorzusehen, in die ein Außengewindeabschnitt des Verbindungsstücks steckbar ist. Aus Gründen einer gleichmäßigen Kraftverteilung wird es jedoch als besonders vorteilhaft angesehen, wenn der Ansatz zwei Ausnehmungen aufweist, die mit zwei Außengewindeabschnitten des Verbindungsstücks zusammenwirken. Vorzugsweise wird man die beiden Teilgewindeabschnitte so anordnen, dass sie im Wesentlichen einander gegenüberliegen. Gleiches gilt entsprechend für die Ausnehmungen des Ansatzes. Für eine gute Handhabbarkeit beim Ineinanderstecken der beiden Verbindungspartner wird man die Ausnehmung größer ausbilden als die Außengewindeabschnitte des Verbindungsstücks.

In wesentlicher Weiterbildung der Erfindung wird vorgeschlagen, dass der Ansatz und das Verbindungsstück nach einer definierten Drehung, vorzugsweise nach einer Vierteldrehung, aneinander anschlagen. Vorzugsweise ist der Anschlag so ausgestaltet, dass die Einschraubtiefe in axialer Richtung begrenzt ist. Der Anschlag kann beispielsweise durch eine ringartige Stirnfläche und/oder eine Schulter gebildet sein. Zweckmäßig sind in der Eingriffstellung die beiden zusammenwirkenden Zahnflanken der beiden Ansätze gegeneinander verspannt.

Bei der erfindungsgemäßen Verbindung steht neben einer auch bei höheren Belastungen ausgezeichneten Stabilität ein Zusammenbau des Trampolins im Vordergrund. Die ausgezeichnete Stabilität wird geschaffen durch die beiden (Teil-)Gewindeabschnitte des Außen- und des Innengewindes, die durch Drehung des Verbindungsstücks (bzw. des Beines) in Gewindeeingriff miteinander gebracht werden. Durch die Relativdrehung bewegt sich das Verbindungsstück in den Ansatz hinein, wobei, wie zuvor ausgeführt, zweckmäßig die Einstecktiefe des Verbindungsstücks in den Ansatz begrenzt ist. Damit nach dem Ineinanderstecken des Verbindungsstücks die jeweiligen Gewindeabschnitte in Eingriff miteinander gelangen können, kann es von Vorteil sein, das Verbindungsstück nicht bis zum Anschlag einzustecken. Dies nämlich könnte zur Folge haben, dass die zugehörigen (Teil-)Gewindeabschnitte nicht in Eingriff miteinander gelangen, sondern selbst aneinander anschlagen, und damit ein Gewindeeingriff nicht möglich ist. Als besonders vorteilhaft hat es sich daher herausgestellt, dass in Weiterbildung der Erfindung dem Ansatz und/oder dem Verbindungsstück ein Abstandshalter zugeordnet ist. Insbesondere kann vorgesehen sein, dass der Abstandshalter flexibel ausgebildet ist.

Der Abstandshalter sorgt dafür, dass das Verbindungsstück nicht gänzlich in den Ansatz gesteckt werden kann, sondern vielmehr in einem gewissen Abstand zueinander gehalten wird. Die Dicke/Breite des Abstandshalters wird man so wählen, dass die Gewindeabschnitte zueinander ausgerichtet sind und bei einem vorgegebenen Anpressdruck durch Drehung in Eingriff miteinander gelangen. In der Praxis wird man das Verbindungsstück in den Ansatz einstecken, bis der Abstandshalter die Einstecktiefe begrenzt. Dann wird man das Verbindungsstück drehen und damit die formschlüssige Verbindung schaffen.

Die vorzugsweise flexible Ausgestaltung des Abstandshalters weist den Vorteil auf, dass beim Einstecken des Verbindungsstücks das Verbindungsstück einen abfedernden Anschlag erfährt. Die Flexibilität kann so eingestellt werden, dass man das Verbindungsstück nach dem Anschlag an den Abstandshalter noch einen vorbestimmten weiteren Weg zusammendrücken muss, bevor das Verbindungsstück durch Drehung formschlüssig mit dem Ansatz verbunden wird. Auch bei der Drehung weist eine flexible Ausgestaltung des Abstandshalters Vorteile auf. Mit Annäherung an die Endstellung nimmt nämlich der Widerstand zu, da der Abstandshalter eine Gegenkraft auf die beiden Verbindungspartner ausübt.

In einer bevorzugten Ausführungsform ist der Abstandshalter als O-Ring ausgebildet.

Vorteilhafterweise sitzt der Abstandshalter auf dem Verbindungsstück, und zwar vorteilhafterweise in einer Aufnahme. Diese Aufnahme kann benachbart zu einem Anschlag des Verbindungsstücks angeordnet sein. Damit wird beim Schließen der erfindungsgemäßen Verbindung zunächst der Abstandshalter zusammengedrückt, bevor das Verbindungsstück zur Anlage an dem Anschlag des Ansatzes gelangt.

Grundsätzlich ist es denkbar, dass der Abstandshalter im Wesentlichen gänzlich oder zu weiten Teilen zusammengedrückt wird, wenn das Verbindungsstück in den Ansatz gedreht wird. Als besonders vorteilhaft jedoch wird es angesehen, wenn der Ansatz und/oder das Verbindungsstück einen Ausdehnungsraum für den Abstandhalter bildet, in den hinein sich der Abstandshalter bei Druckbeaufschlagung erstrecken kann. Dies gewährleistet, dass das Verbindungsstück und der Ansatz in ihrer Endstellung tatsächlich direkt aneinander anliegen. Dadurch wird eine definierte und dauerhafte (aber lösbare) Verbindung geschaffen.

Bei der erfindungsgemäßen Verbindung besteht ein wesentlicher Aspekt in der stabilen Konstruktion. Ebenfalls von Bedeutung ist ein einfaches Einschrauben des Trampolinbeines. Neben dem zuvor beschriebenen Abstandshalter kann zusätzlich oder alternativ vorgesehen sein, dass der Gewindeeintritt des Ansatzes angefast ist. Durch die Anfasung entsteht eine größere Öffnung des Gewindegangs im Sinne eines Trichters, der ein sicheres Ineinanderfügen der Gewindegänge ermöglicht.

Der Ansatz kann mit dem Rahmen des Trampolins verbunden, insbesondere an dem Rahmen angeschweißt sein. Alternativ kommt eine Verschraubung oder Verklebung in Betracht. Auch möglich ist eine integrale Ausbildung des Rahmens mit dem Ansatz. Grundsätzlich sollen im Rahmen der Erfindung alle Befestigungen abgedeckt sein. Im Übrigen wird es als vorteilhaft angesehen, wenn der Ansatz an dem Trampolinrahmen verschweißt ist. Unter dem Begriff des Rahmens wird nicht nur der kreisförmige Rohrabschnitt verstanden, der auch das Sprungtuch hält. Vielmehr sind auch Konstruktionen denkbar, bei denen die Beine nicht unmittelbar an dem kreisförmigen Rohrabschnitt befestigt werden.

Im Folgenden wird die Erfindung anhand von erfindungsgemäßen Ausführungsbeispielen im Zusammenhang mit der anhängen Zeichnung näher erläutert. Die Zeichnung zeigt in:
- Figur 1: zur Darstellung der vorteilhaften erfindungsgemäßen Verbindung in abstrahierter Form einen ersten Verbindungspartner des erfindungsgemäßen Trampolins;
- Figur 2: in ebenfalls abstrahierter Darstellung einen zweiten Verbindungspartner des erfindungsgemäßen Trampolin;
- Figur 3: in schematischer Darstellung das Verbinden des ersten und des zweiten Verbindungspartners;
- Figur 4: ein erstes Ausführungsbeispiel eines erfindungsgemäßen Trampolin-Beins in einer ersten - ausgeklappten - Stellung;
- Figur 5: das erfindungsgemäße Trampolin-Bein nach Figur 4 in einer zweiten - eingeklappten - Stellung;
- Figur 6: in schematischer Darstellung ein Detail des erfindungsgemäßen Beins;
- Figur 7: in schematischer Darstellung ein Detail des erfindungsgemäßen Trampolins;
- Figur 8: in schematischer Darstellung ein zweites Ausführungsbeispiel eines erfindungsgemäßen Trampolinbeins in einer ausgeklappten Stellung;
- Figur 9: in schematischer Darstellung das zweite Ausführungsbeispiel des erfindungsgemäßen Trampolinbeins im Übergang zu einer eingeklappten Stellung;
- Figur 10: in schematischer Darstellung das zweite Ausführungsbeispiel des erfindungsgemäßen Trampolinbeins in der eingeklappten Stellung; und
- Figur 11: in schematischer Darstellung eine Seitenansicht des zweiten Ausführungsbeispiels des erfindungsgemäßen Trampolinbeins analog Figur 9.

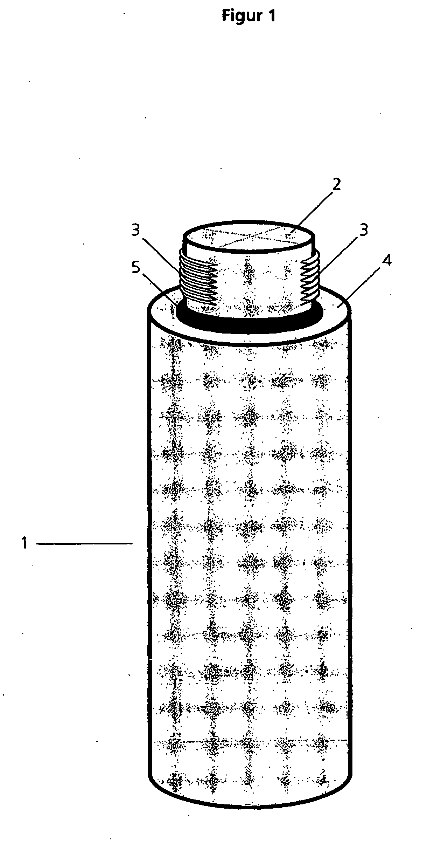

Die Figuren 1 bis 3 zeigen ein Ausführungsbeispiel der erfindungsgemäßen Verbindung. Der in Figur 1 dargestellte erste Verbindungspartner 1 kann hierbei für ein Verbindungsstück stehen, wie es im folgenden noch näher erläutert wird. Figur 1 zeigt in schematischer Darstellung einen ersten Verbindungspartner 1 eines (nicht dargestellten) Trampolins. Der erst Verbindungspartner 1 weist einen Zylinderabschnitt 2 auf, der zwei Außengewindeabschnitte 3 trägt. Die beiden Abschnitte 3 liegen einander gegenüber. Der erste Verbindungspartner 1 weist ferner eine Schulter 4 auf, die als Anschlag für den zweiten Verbindungspartner dient, wie es im Folgenden noch näher erläutert wird.

Auf dem Zylinderabschnitt 2 sitzt ein als O-Ring 5 ausgebildeter Abstandshalter.

Der erste Verbindungspartner 1 kann selbst als Bein eines erfindungsgemäßen Trampolins ausgebildet sein. In aller Regel wird der Verbindungspartner 1 jedoch Teil eines Trampolin-Beins sein. Darüber hinaus ist es grundsätzlich auch möglich, den Verbindungspartner 1 dem Trampolin zuzuordnen.

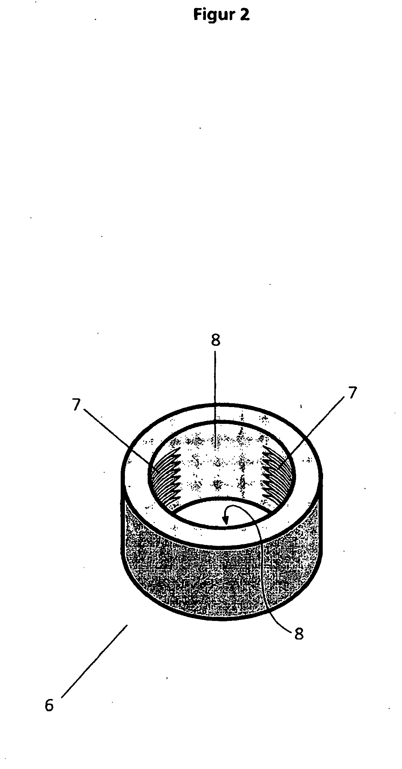

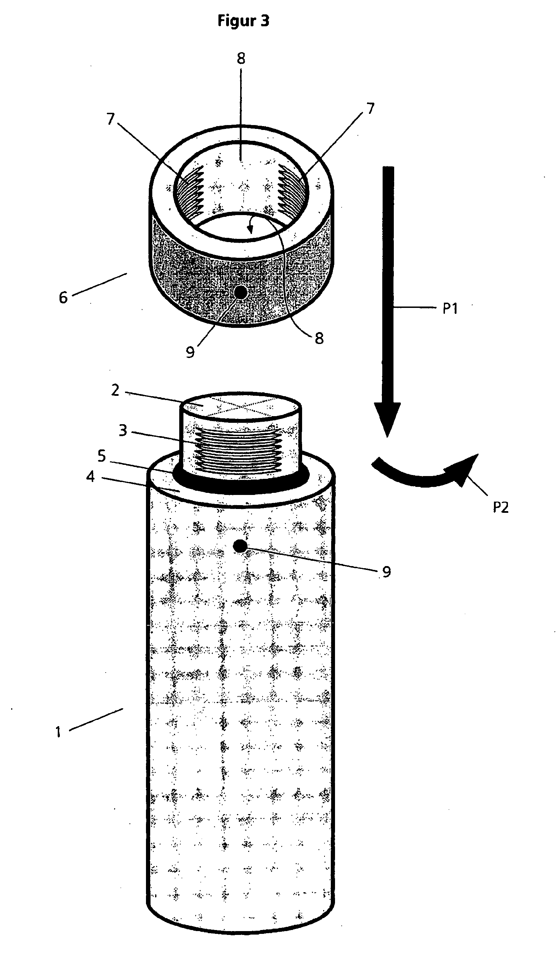

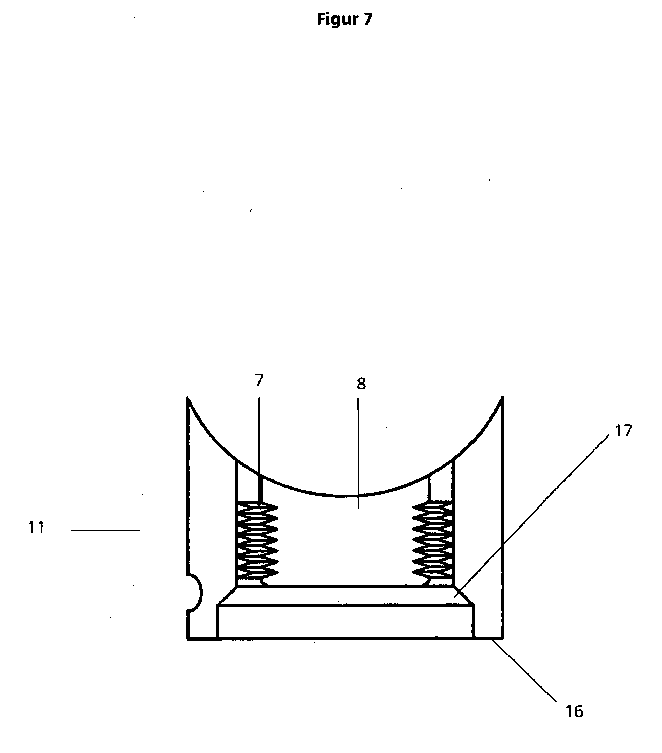

Figur 2 zeigt einen zweiten Verbindungspartner 6, der zusammen mit dem ersten Verbindungspartner 1 gemäß Figur 1 die erfindungsgemäße Anbindung des Beins an dem Trampolin gestattet. Der zweite Verbindungspartner kann für einen Ansatz stehen, der dem Trampolinrahmen zugeordnet ist. Ein derartiger Ansatz ist auch ini Figur 7 gezeigt. Der zweite Verbindungspartner 6 weist ein Innengewinde 7 auf, das von zwei vorzugsweise gegenüberliegenden Ausnehmungen 8 unterbrochen ist, von denen nur die in Figur 3 obere Ausnehmung 8 sichtbar ist. Erfindungsgemäß ist mindestens eine Ausnehmung 8 vorgesehen. Die mindestens eine Ausnehmung 8 springt gegenüber dem Gewinde 7 zurück. Das Gewinde ist gegenüber der mindestens einen Ausnehmung 8 also erhaben.

Figur 3 zeigt in schematischer Darstellung das Ineinanderfügen des ersten und des zweiten Verbindungspartners 1 und 6. Bei dem gezeigten Ausführungsbeispiel wird der zweite Verbindungspartner 6 auf den ersten Verbindungspartner 1 in Richtung des Pfeils P1 derart aufgesteckt, dass die Außengewindeabschnitte 3 des ersten Verbindungspartners 1 in die Ausnehmungen 8 des zweiten Verbindungspartners 6 eingreifen. Hierzu weisen die Ausnehmungen 8 einen größeren, vorzugsweise geringfügig größeren, Durchmesser auf als die Außengewindeabschnitte 3.

Zur Ausrichtung der beiden Verbindungspartner 6 und 1 können Markierungen 9 vorgesehen sein, die insbesondere außen auf den Verbindungspartnern 6 und 1 angeordnet sind. Die Markierungen kennzeichnen die Einsteckposition.

Der zweite Verbindungspartner 6 wird so weit auf den ersten Verbindungspartner 1 gesteckt, bis er zur Anlage auf dem O-Ring 5 kommt. Anschließend werden beide Verbindungspartner 6, 1 unter Druck noch ein wenig weiter ineinandergeschoben, bevor der zweite Verbindungspartner 6 um 90° in Richtung des Pfeils P2 gedreht wird. Dadurch gelangen die beiden Verbindungspartner 6, 1 in Gewindeeingriff. Beide Verbindungspartner 6, 1 werden so weit ineinandergedreht, bis der zweite Verbindungspartner 6 auf der Schulter 4 des ersten Verbindungspartners 1 anschlägt.

Im Zusammenhang mit den Figuren 1 bis 3 wird gezeigt, wie der erste Verbindungspartner 6 auf den zweiten Verbindungspartner 1 gesteckt wird. Im konkreten Anwendungsfall von Trampolinen wird man den zweiten Verbindungspartner 6 dem Ansatz am Rahmen zuordnen. In kinematischer Umkehr wird man also im Regelfall den ersten Verbindungspartner 1 entgegen der Pfeilrichtung P1 in den zweiten Verbindungspartner 6 stecken und durch Drehung in Gewindeeingriff mit dem zweiten Verbindungspartner bringen. Es versteht sich, dass die Form der Verbindungspartner stark abstrahiert ist. Es soll vorliegend lediglich die vorteilhafte Gewindegeometrie verdeutlicht werden.

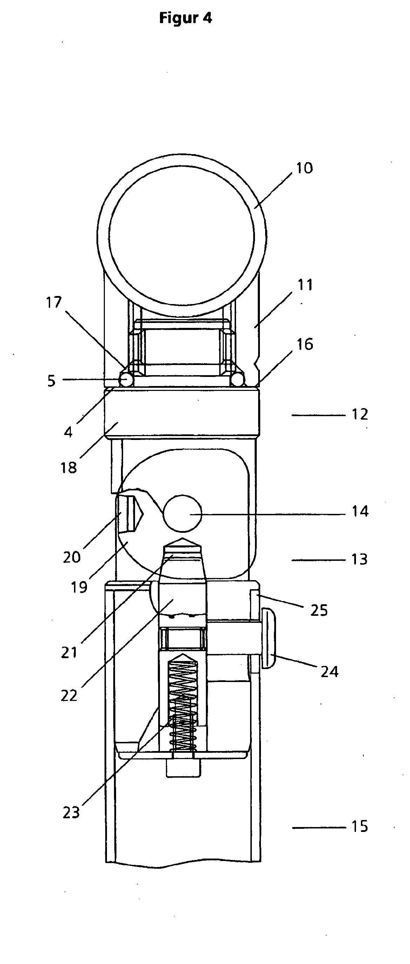

Figur 4 zeigt ein erstes Ausführungsbeispiel eines erfindungsgemäßen Trampolin-Beins, das ausgeklapppt in einer seitlichen teilweise geschnittenen Ansicht dargestellt ist. In Figur 4 sind von oben nach unten dargestellt der Rahmen 10 eines Trampolins, ein als Ansatz 11 ausgebildeter zweiter Verbindungspartner, der mit dem Rahmen 10 verschweißt ist, ein als erster Verbindungspartner ausgebildetes Verbindungsstück 12, das in den Ansatz 11 eingeschraubt ist, ein Adapterstück 13, das über eine Achse 14 mit dem Verbindungsstück 12 gelenkig verbunden ist, und ein Beinabschnitt 15, der rohrartig ausgebildet ist und in dessen einem Ende das Adapterstück 13 aufgenommen ist. Für einen sicheren Halt kann das Rohr auf das Adapterstück aufgeklebt und/oder aufgeschrumpft sein. Auch eine Vernietung oder Verschweißung ist möglich.

Der Ansatz 11 und das Verbindungsstück 12 stehen in Gewindeeingriff miteinander. In der Endstellung schlagen beide Verbindungspartner 11, 12 aneinander an. Die jeweiligen Anschläge werden gebildet durch die Schulter 4 (siehe auch Figur 3) und eine Stirnfläche 16 (siehe auch Figur 7).

Der Ansatz 11 weist einen Ausdehnungsraum 17 für den O-Ring 5 auf. Der Ausdehnungsraum ist im Detail in Figur 7 dargestellt. In diesen Ausdehnungsraum 17 erstreckt sich der O-Ring 5, wenn er beim Zusammenfügen der Verbindungspartner 11, 12 zusammengedrückt wird. Dadurch können die Anschlagflächen 4, 16 der beiden Verbindungspartner 11, 12 direkt in Kontakt miteinander gelangen, ohne Gefahr zu laufen, dass der O-Ring 5 zwischen ihnen eingeklemmt wird.

Der Ansatz 11 weist ferner einen umlaufenden Rand 18 auf, an den sich ein rückwärtiger Ansatz 19 anschließt. In dem Ansatz 19 sind zwei Sacklochbohrungen 20, 21 ausgebildet, wobei das Trampolin-Bein in der ausgeklappten Stellung gezeigt ist, in der der Beinabschnitt 15 durch Eingriff eines Bolzens 22 in die Sacklochbohrung 21 arretiert ist. Die Sacklochbohrung 21 erstreckt sich in axialer Richtung des Verbindungsstücks 12. Vorzugsweise ist die Sacklochbohrung 21 zumindest teilweise konisch ausgebildet. Gleiches gilt für den Endabschnitt des Bolzens 22. Hierdurch wird ein fester Eingriff geschaffen, der eine sichere und spielfreie Arretierung des Trampolin-Beins gewährleistet.

Der Bolzen 22 ist in dem Adapterstück 13 geführt und vorzugsweise gegen die Vorspannung einer Feder 23 über einen Betätigungsknopf 24 in axialer Richtung bewegbar.

Auf dem Adapterstück 13 sitzt der Beinabschnitt 15, der rohrartig ausgebildet ist. Den Querschnitt des Beinabschnitts wird man dem Querschnitt des Adapterstücks anpassen. Vorzugsweise ist er rund ausgebildet. In der Umfangswandung des Beinabschnitts 15 befindet sich eine Aussparung 25, die vorteilhafterweise schlitzartig ausgebildet ist und durch die hindurch der Betätigungsknopf 24 greift.

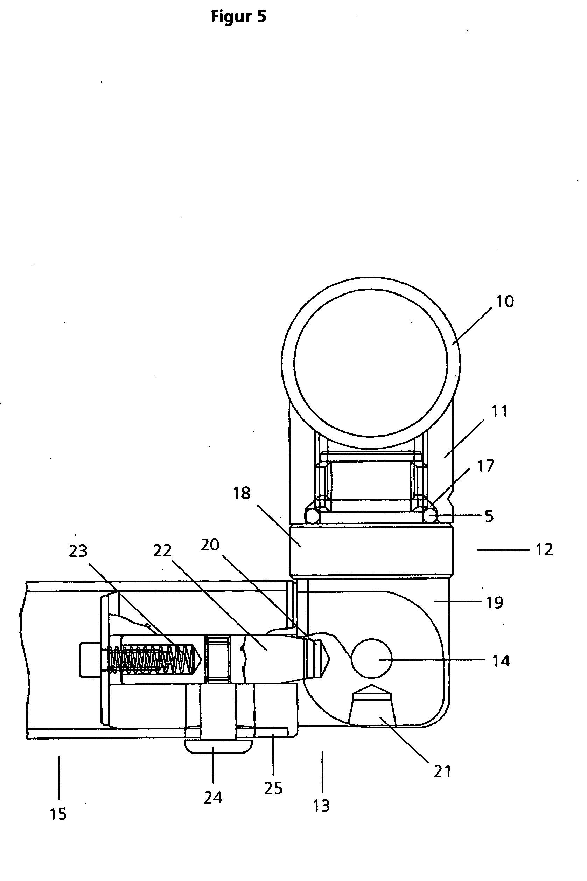

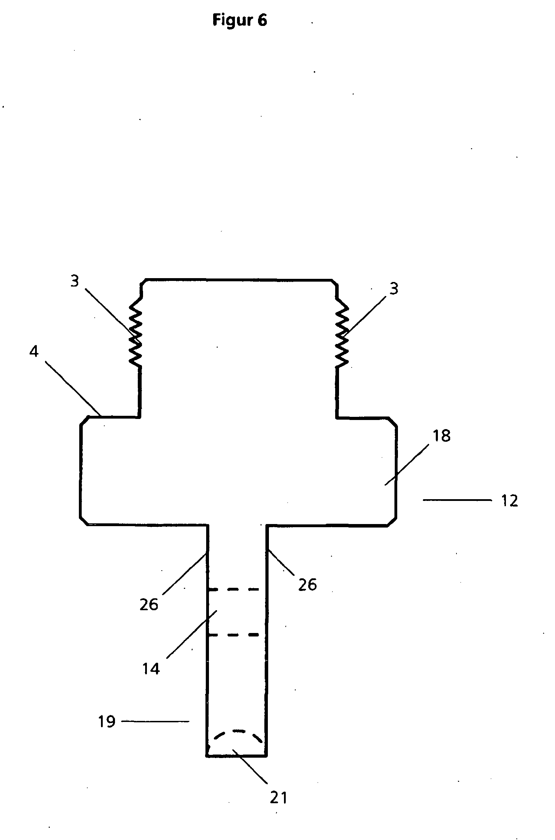

Es wird auf Figur 5 Bezug genommen, die das Bein gemäß Figur 4 in einer eingeklappten Stellung zeigt. Hierbei greift der Bolzen 22 in die Sacklochbohrung 20 ein. Das erfindungsgemäße Bein gestattet, dass alle über den Rahmen des Trampolins verteilten Beine in die Mitte des Trampolins zeigen. Vorzugsweise weist der Ansatz 19 des Verbindungsstücks 12 parallele Seitenflächen 26 (siehe Figur 6) auf, die das Adapterstück 13 einseitig oder zweckmäßig beidseitig umgreift. Die Seitenflächen dienen als Führung.

Figur 6 zeigt das Verbindungsstück 12 schematisch in Alleinstellung. Wie gut zu erkennen, sind die beiden Seitenflächen 26 des Ansatzes 19 parallel ausgerichtet. Der rückwärtige Ansatz 19 wird im eingebauten Zustand von dem Adapterstück 13 beidseitig umgriffen. Die beiden ebenfalls nur schematisch angedeuteten Gewindeabschnitte 3 liegen einander gegenüber.

Figur 7 schließlich zeigt den als zweiten Verbindungspartner ausgebildeten Ansatz 11 in Alleinstellung. Der teilskreisförmige Abschnitt des Ansatzes 11 dient zur Befestigung an einem Trampolin. Auf der entgegengesetzten Seite ist die Stirnfläche 16 ausgebildet, die eine Anschlagsfläche zur Anlage an bzw. auf der Schulter 4 zur Verfügung stellt. Das Gewinde 7 ist durch zwei Ausnehmungen 8 unterbrochen.

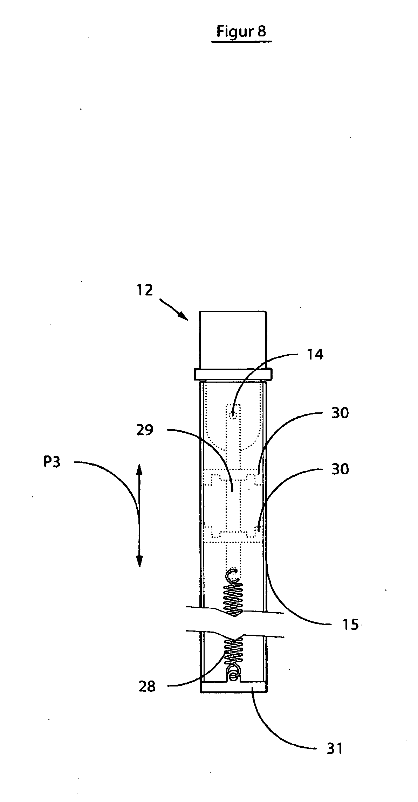

Die Figuren 8 bis 11 zeigen in schematischer Darstellung ein zweites Ausführungsbeispiel eines erfindungsgemäßen Trampolinbeins. Das Trampolinbein umfasst die folgenden Komponenten, wobei aus Gründen der Übersichtlichkeit gleiche Bezugszeichen für gleiche Komponenten des ersten Ausführungsbeispiels verwendet werden, auch wenn sich die konkrete Konstruktion geringfügig unterscheiden mag.

Mit der Bezugsziffer 12 ist das erfindungsgemäße Verbindungsstück gekennzeichnet. Das Verbindungsstück 12 weist einen Verbindungsabschnitt 27 auf, mit dem das Verbindungsstück 12 mit dem Ansatz eines Trampolinrahmens verbunden wird. Ein Beispiel der Verbindung ist in den vorherigen Figuren gezeigt.

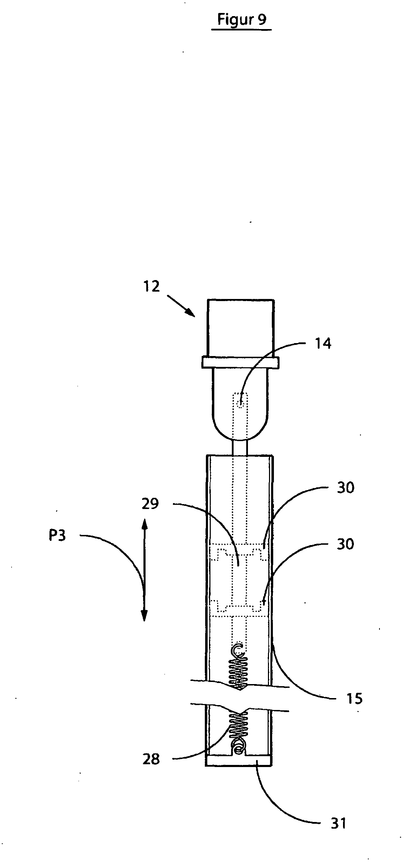

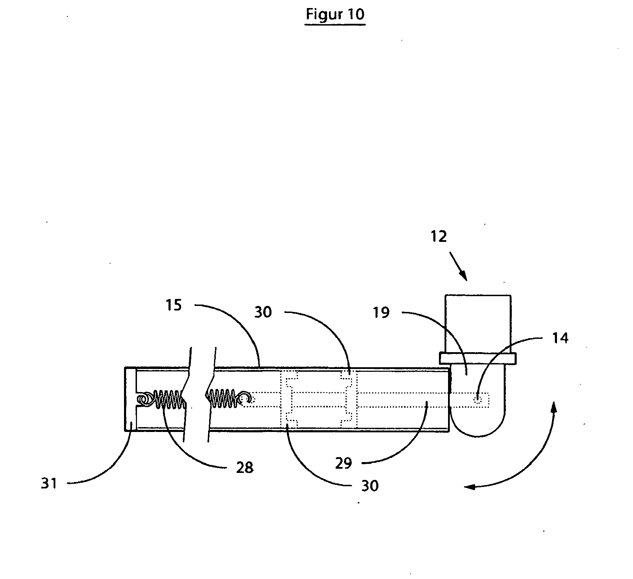

Auf dem Verbindungsstück 12 sitzt - unter der Vorspannung einer Feder 28 - der langgestreckte Beinabschnitt 15, der vorzugsweise rohrartig ausgebildet ist. Zur Aufnahme des Beinabschnitts 15 weist das Verbindungsstück 12 einen rückwärtigen Ansatz 19 auf, durch den hindurch die Schwenkachse 14 geht. Der Beinabschnitt 15 ist also schwenkbar mit dem Verbindungsstück verbunden. Hierzu dient eine Stange 29, die an ihrem einen Ende an dem Verbindungsstück 12 angelenkt ist. An ihrem anderen Ende ist die Stange 29 mit der Feder 28 verbunden. Die Feder 28 steht stets unter Zugspannung. Dies bedeutet, dass der Beinabschnitt 15 unter Vorspannung auf dem Verbindungsstück 12 sitzt und dort gehalten wird. Er ist in Richtung des Pfeils P3 von dem Verbindungsstück 12 abnehmbar (siehe Figur 9), derart, dass der Beinabschnitt 15 nach Abzug von dem Verbindungsstück in die eingeklappte Stellung gemäß Figur 10 bringbar ist. Umgekehrt ist der Beinabschnitt wieder auf das Verbindungsstück 12 aufsteckbar.

Die Stange 29 ist in dem Beinabschnitt 15 durch zwei Führungen 30 geführt. Die beiden Führungen stützen sich an der Innenwand des Beinabschnitts 15 ab. Sie sind beispielsweise eingeklemmt oder eingeklebt. In den Führungen 30 ist die Stange 29 längsverschieblich gelagert.

Die Feder 28 ist an ihrem einen Ende mit der Stange 29 verbunden. An ihrem anderen Ende ist sie von einem Stirnstück 31 gehalten, das sich vorzugsweise an dem distalen Ende des Beinabschnitts 15 abstützt. Wie zuvor ausgeführt, handelt es sich um eine Zugfeder.

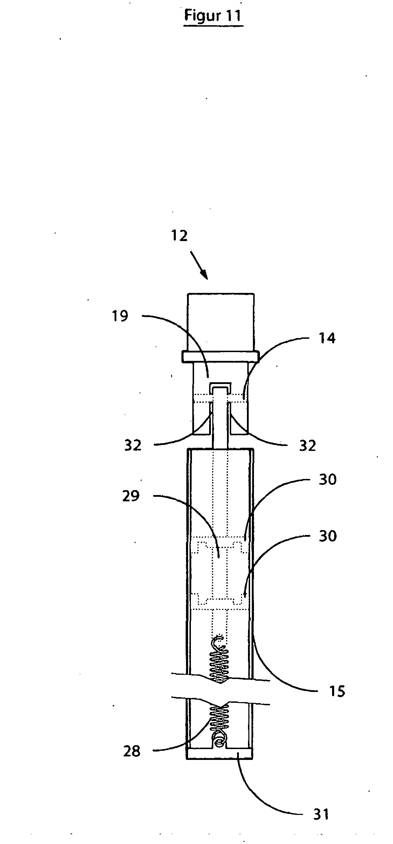

Es wird auf Figur 11 Bezug genommen, die das erfindungsgemäße Bein in der Übergangsstellung gemäß Figur 9 zeigt, jedoch in einer Seitenansicht. Aus Figur 11 wird deutlich, dass der Beinabschnitt 11 ausschließlich um die Schwenkachse 14 schwenkbar ist, und zwar vorteilhafterweise nur einer Schwenkebene. Toleranzen können bedingen, dass es zu geringfügigen Abweichungen von der Schwenkebene kommt. Allerdings weist der Ansatz 19 zwei Führungen 32 auf, die die Schwenkbewegung des Beinabschnitts 15 seitlich begrenzen. Insoweit ist sichergestellt, dass der Beinabschnitt 15 stets im wesentlichen in einer Ebene geschwenkt/geklappt wird und damit im abgeklappten Zustand stets in die Mitte des Trampolins zeigt.

**Bezugszeichenliste**

| | | | |
|---|---|---|---|
| 1 | Erster Verbindungspartner | 23 | Feder |
| 2 | Zylinderabschnitt | 24 | Knopf |
| 3 | Außengewindeabschnitt | 25 | Aussparung |
| 4 | Schulter | 26 | Seitenflächen |
| 5 | O-Ring | 27 | Verbindungsabschnitt |
| 6 | Zweiter Verbindungspartner | 28 | Feder |
| 7 | Innengewinde | 29 | Stange |
| 8 | Ausnehmung | 30 | Führung |
| 9 | Markierung | 31 | Stirnstück |
| 10 | Rahmen | 32 | Führung |
| 11 | Ansatz | | |
| 12 | Verbindungsstück | P1 | Pfeil |
| 13 | Adapterstück | P2 | Pfeil |
| 14 | Achse | P3 | Pfeil |
| 15 | Beinabschnitt | | |
| 16 | Stirnfläche | | |
| 17 | Ausdehnungsraum | | |
| 18 | Rand | | |
| 19 | Rückwärtiger Ansatz | | |
| 20 | Bohrung | | |
| 21 | Bohrung | | |
| 22 | Bolzen | | |

## Patentansprüche

1. Trampolin mit abnehmbaren Beinen, wobei die Beine aufweisen:
■ ein Verbindungsstück (12), und
■ einen langgestreckten Beinabschnitt (15),
■ wobei der Beinabschnitt (15) schwenkbar mit dem Verbindungsstück (12) gekoppelt ist.
**dadurch gekennzeichnet**,
■ dass das Verbindungsstück (12) lösbar mit einem Rahmen (10) des Trampolins verbunden ist.

2. Trampolin nach Anspruch 1, **dadurch gekennzeichnet, dass** das Verbindungsstück (12) einen rückwärtigen Ansatz (19) aufweist, durch den hindurch die Schwenkachse (14) geht.

3. Trampolin nach Anspruch 1 oder 2, **dadurch gekennzeichnet, dass** der Beinabschnitt (15) derart mit dem Verbindungsstück (12) gekoppelt ist, dass er im wesentlichen nur in einer Ebene schwenkbar ist.

4. Trampolin nach einem der Ansprüche 1 bis 3, **dadurch gekennzeichnet, dass** das Verbindungsstück (12) mindestens eine Führung (32) aufweist, die die Schwenkbewegung des Beinabschnitts (15) seitlich begrenzt.

5. Trampolin nach einem der Ansprüche 1 bis 4, **dadurch gekennzeichnet, dass** der Beinabschnitt (15) auf das Verbindungsstück (12) aufsteckbar ist.

6. Trampolin nach einem der Ansprüche 1 bis 5, **dadurch gekennzeichnet, dass** der Beinabschnitt (15) unter Vorspannung mit dem Verbindungsstück (12) verbunden ist.

7. Trampolin nach einem der Ansprüche 1 bis 6, **gekennzeichnet durch** eine Stange (29), die an ihrem einen Ende an dem Verbindungsstück (12) angelenkt und an ihrem anderen Ende federbeaufschlagt ist.

8. Trampolin nach Anspruch 7, **dadurch gekennzeichnet, dass** die Stange (29) in dem Beinabschnitt (15) geführt ist.

9. Trampolin nach einem der Ansprüche 1 bis 8, **gekennzeichnet durch** ein Adapterstück (13), das auf der einen Seite mit dem Beinabschnitt (15) verbunden ist und das auf der anderen Seite an dem Verbindungsstück (12) angelenkt ist.

10. Trampolin nach Anspruch 9, **dadurch gekennzeichnet, dass** der Beinabschnitt (15) sowohl in der ausgeklappten Stellung als auch in der eingeklappten Stellung arretierbar ist.

11. Trampolin nach Anspruch 9 oder 10, **dadurch gekennzeichnet, dass** das Verbindungsstück (12) zwei Bohrungen (20; 21) aufweist, in die ein Arretierbolzen (22) zur wahlweisen Festlegung des Beins in der ausgeklappten oder der eingeklappten Stellung in Eingriff bringbar ist.

12. Trampolin nach einem der Ansprüche 1 bis 11, **dadurch gekennzeichnet, dass** das Verbindungsstück (12) mindestens einen Gewindeabschnitt (3), insbesondere einen Außengewindeabschnitt, zur Verbindung mit dem Rahmen (10) aufweist.

13. Trampolin nach einem der Ansprüche 1 bis 12, **dadurch gekennzeichnet, dass** das Verbindungsstück (12) eine vorzugsweise umlaufende Schulter (4) aufweist, die als Anschlag dient.

14. Trampolin nach einem der Ansprüche 1 bis 13, **dadurch gekennzeichnet, dass** der Rahmen (10) des Trampolins mindestens einen Ansatz (11) mit einem Innengewinde (7) aufweist, das in mindestens einem Teilabschnitt eine Ausnehmung (8) aufweist, und dass das Verbindungsstück (12) mindestens einen Außengewindeabschnitt (3) aufweist, wobei das Verbindungsstück (12) mit seinem Außengewindeabschnitt (3) in die Ausnehmung (8) des Ansatzes (11) steckbar und durch Relativdrehung in Gewindeeingriff mit dem Ansatz bringbar ist.

15. Trampolin nach Anspruch 14, **dadurch gekennzeichnet, dass** sich bei dem Innengewinde um ein eingängiges Gewinde handelt.

## Claims

1. Trampoline with removable legs, the legs having:
• a connecting piece (12), and
• an elongate leg portion (15),
• wherein the leg portion (15) is coupled in a pivotable manner to the connecting piece (12),
**characterized**
• **in that** the connecting piece (12) is connected in a releasable manner to a frame (10) of the trampoline.

2. Trampoline according to Claim 1, **characterized in that** the connecting piece (12) has a rear attachment (19), through which the pivot pin (14) passes.

3. Trampoline according to Claim 1 or 2, **characterized in that** the leg portion (15) is coupled to the connecting piece (12) such that it can be pivoted essentially only in one plane.

4. Trampoline according to one of Claims 1 to 3, **characterized in that** the connecting piece (12) has at least one guide (32), which delimits the pivoting movement of the leg portion (15) laterally.

5. Trampoline according to one of Claims 1 to 4, **characterized in that** the leg portion (15) can be plugged onto the connecting piece (12).

6. Trampoline according to one of Claims 1 to 5, **characterized in that** the leg portion (15) is connected to the connecting piece (12) with prestressing.

7. Trampoline according to one of Claims 1 to 6, **characterized by** a rod (29), which has one end connected to the connecting piece (12) and its other end spring-activated.

8. Trampoline according to Claim 7, **characterized in that** the rod (29) is guided in the leg portion (15).

9. Trampoline according to one of Claims 1 to 8, **characterized by** an adaptor piece (13) which, on the one side, is connected to the leg portion (15) and, on the other side, articulated on the connecting piece (12).

10. Trampoline according to Claim 9, **characterized in that** the leg portion (15) can be arrested both in the swung-out position and in the swung-in position.

11. Trampoline according to Claim 9 or 10, **characterized in that** the connecting piece (12) has two bores (20; 21), in which an arresting bolt (22) can be brought into engagement for optionally securing the leg in the swung-out or the swung-in position.

12. Trampoline according to one of Claims 1 to 11, **characterized in that** the connecting piece (12) has at least one threaded portion (3), in particular an externally threaded portion, for connection to the frame (10).

13. Trampoline according to one of Claims 1 to 12, **characterized in that** the connecting piece (12) has a preferably encircling shoulder (4), which serves as a stop.

14. Trampoline according to one of Claims 1 to 13, **characterized in that** the frame (10) of the trampoline has at least one attachment (11) with an internal thread (7), which, in at least one part, has an aperture (8), and **in that** the connecting piece (12) has at least one externally threaded portion (3), wherein the connecting piece (12) can be plugged, by way of its externally threaded portion (3), into the aperture (8) of the attachment (11) and can be brought into threaded engagement with the attachment by way of relative rotation.

15. Trampoline according to Claim 14, **characterized in that** the internal thread is a single-turn thread.

## Revendications

1. Trampoline comprenant des pieds amovibles, les pieds présentant :
- une pièce de connexion (12), et
- une portion de pied allongée (15),
- la portion de pied (15) étant accouplée de manière pivotante à la pièce de connexion (12),
**caractérisé en ce que**
- la pièce de connexion (12) est connectée de manière amovible à un cadre (10) du trampoline.

2. Trampoline selon la revendication 1, **caractérisé en ce que** la pièce de connexion (12) présente une pièce saillante orientée vers l'arrière (19) à travers laquelle passe l'axe de pivotement (14).

3. Trampoline selon la revendication 1 ou 2, **caractérisé en ce que** la portion de pied (15) est accouplée à la pièce de connexion (12) de telle sorte qu'elle ne puisse pivoter essentiellement que dans un plan.

4. Trampoline selon l'une quelconque des revendications 1 à 3, **caractérisé en ce que** la pièce de connexion (12) présente au moins un guide (32), qui limite latéralement le mouvement de pivotement de la portion de pied (15).

5. Trampoline selon l'une quelconque des revendications 1 à 4, **caractérisé en ce que** la portion de pied (15) peut être enfichée sur la pièce de connexion (12).

6. Trampoline selon l'une quelconque des revendications 1 à 5, **caractérisé en ce que** la portion de pied (15) est connectée avec précontrainte à la pièce de connexion (12).

7. Trampoline selon l'une quelconque des revendications 1 à 6, **caractérisé par** une tige (29) qui est connectée par l'une de ses extrémités à la pièce de connexion (12) et qui est sollicitée par ressort à son autre extrémité.

8. Trampoline selon la revendication 7, **caractérisé en ce que** la tige (29) est guidée dans la portion de pied (15).

9. Trampoline selon l'une quelconque des revendications 1 à 8, **caractérisé par** une pièce d'adaptateur (13) qui est connectée d'un côté à la portion de pied (15) et qui est articulée de l'autre côté à la pièce de connexion (12).

10. Trampoline selon la revendication 9, **caractérisé en ce que** la portion de pied (15) peut être bloquée à la fois dans la position ouverte par pivotement et dans la position rentrée par pivotement.

11. Trampoline selon la revendication 9 ou 10, **caractérisé en ce que** la pièce de connexion (12) présente deux perçages (20 ; 21) dans lesquels peut être engagé un boulon de blocage (22) pour la fixation sélective du pied dans la position ouverte par pivotement ou dans la position rentrée par pivotement.

12. Trampoline selon l'une quelconque des revendications 1 à 11, **caractérisé en ce que** la pièce de connexion (12) présente au moins une portion filetée (3), en particulier une portion à filetage extérieur, pour la connexion au cadre (10).

13. Trampoline selon l'une quelconque des revendications 1 à 12, **caractérisé en ce que** la pièce de connexion (12) présente un épaulement de préférence périphérique (4) qui sert de butée.

14. Trampoline selon l'une quelconque des revendications 1 à 13, **caractérisé en ce que** le cadre (10) du trampoline présente au moins une pièce saillante (11) présentant un filetage interne (7), lequel présente, dans au moins une portion partielle, un évidement (8), et **en ce que** la pièce de connexion (12) présente au moins une portion à filetage extérieur (3), la pièce de connexion (12) pouvant être enfichée avec sa portion à filetage extérieur (3) dans l'évidement (8) de la pièce saillante (11) et pouvant être amenée par rotation relative en prise d'engagement fileté avec la pièce saillante.

15. Trampoline selon la revendication 14, **caractérisé en ce que** le filetage interne est un filetage à un pas.
